# EUROPEAN PATENT SPECIFICATION

(11) **EP 0 514 861 B1**
(45) Date of publication and mention of the grant of the patent: **02.08.1995**
(21) Application number: 92108505.6
(22) Date of filing: 20.05.1992
(51) Int. Cl.: H02G 3/06, H02G 3/08, H02G 15/013

(54) **Device for sealingly coupling tubular elements to junction boxes for electrical components**
Vorrichtung zum abgedichteten Verbinden von rohrförmigen Elementen an Abzweigdosen für elektrische Komponenten
Dispositif pour accouplement étanche d'éléments tubulaires aux boîtes de jonction pour composants électriques

(30) Priority: 23.05.1991 IT MI910452 U
(43) Date of publication of application: 25.11.1992
(73) Proprietor: Previdi, Ermanno, 20127 Milano (IT); Rienzi, Francesco, I-20123 Milano (IT)
(72) Inventor: Previdi, Ermanno, 20127 Milano (IT); Rienzi, Francesco, I-20123 Milano (IT)
(74) Representative: Modiano, Guido, Dr.-Ing.

(56) References cited:
- EP-A- 0 402 653
- FR-A- 1 282 648
- GB-Patent No. 4670, A.D. 1912

## Description

The present invention relates to a device for sealingly coupling tubular elements to junction boxes for electrical components, as defined in the preamble of the appended claim 1 and as shown in FR-A-1 282 648.

As is known, junction boxes for electrical components are manufactured with generally square or rectangular shapes and have, on their side walls, one or more openings, depending on the size of the box, for the possible connection of the tubular elements inside which the electric cables are passed.

In order to assure watertightness characteristics of the junction box, closure elements are usually provided at the openings; said closure elements are substantially constituted by elastic membranes which have a stepped convexed shape toward their outside part, so that the installer, during use, cuts out and removes the membrane portion so as to open a hole which matches the external size of the tubular element which must be applied.

The cut membrane, by engaging the outer surface of the tube, must provide a fluid-tight seal with respect to the tube.

This solution, which might work from a theoretical point of view, in practice has proved itself scarcely effective, since defects may occur during the cutting of the membrane, so that the hole which is opened does not match the tube correctly; furthermore, if axial offsets or movements of the tubes occur at the time of installation, said tubes would produce on the membrane forces which could cause the separation of said membrane from said tube in some surface portions, so that there would unavoidably be points or regions where the seal is unstable.

Other known solutions entail the execution, at the inlets, of true expansion seals, with an external ring which acts by compression on a conical gasket which, being compressed axially, generates a contraction in a radial direction, thus providing the seal on the tube.

This solution, which is undoubtedly valid from a functional point of view as regards tightness, is scarcely practical due to the presence of a separate element constituted by the gasket.

These types of inlet furthermore do not allow easy adaptation to the different types of diameters used for the tubes to be connected to the junction box.

The aim of the invention is indeed to solve the above described problem by providing a device for sealingly coupling tubular elements to junction boxes for electrical components which allows to provide a perfect seal at the region where said tubular element is connected, without however having a gasket which constitutes a separate element to be installed separately.

Within the scope of the above aim, a particular object of the invention is to provide a sealed coupling device which can adapt very easily to the different outside dimensions of the tubes without thereby causing complications during installation.

Another object of the present invention is to provide a device for sealingly coupling tubular elements which by virtue of its peculiar constructive characteristics is capable of giving the greatest assurances of reliability and safety in use.

Not least object of the present invention is to provide a device which can be easily obtained starting from commonly commercially available elements and materials and is furthermore competitive from a merely economical point of view.

According to the present invention, there is provided, in combination, a junction box and a plurality of connecting elements for sealingly coupling tubular elements to the junction box, said junction box being provided with a plurality of seats each provided with an internal thread, said connecting elements comprising a stem having an internal through channel and an external thread for screwing said stem in said seat, said stem further having a gasket with an internal hole for sealingly accommodating a tubular element therein, characterized in that all of said plurality of seats have a similar internal diameter and all of said connecting elements have an equal diameter stem, said internal holes of said gaskets having variable diameter which correspond to different outside diameters of the tubular elements to be coupled to the junction box.

Further characteristics and advantages will become apparent from the detailed description of a device for sealingly coupling tubular elements to junction boxes for electrical components, illustrated only by way of non-limitative example in the accompanying drawings, wherein:
figure 1 is a schematic perspective view of the device for sealingly coupling tubular elements, applied to a junction box, which is illustrated schematically;
figure 2 is a sectional view of the threaded seat defined on the junction box;
figure 3 is a view of different types of connections for tubes having different diameters;
figure 4 is a schematic sectional view of a plug which can be applied to the threaded seat.

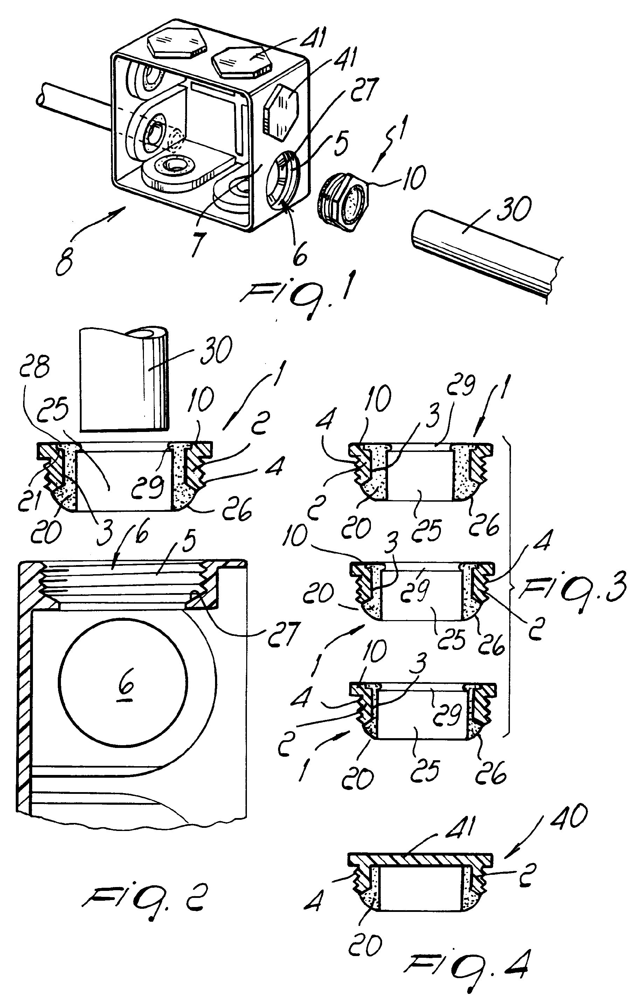

With reference to the above figures, the device for sealingly coupling tubular elements to junction boxes for electrical components, according to the invention, comprises a connecting element, generally designated by the reference numeral 1, provided with a stem 2 having an internal through channel 3 and an external thread 4; said thread can be coupled to the thread 5 of a seat 6 which is defined on the side wall 7 of a junction box, which is generally designated by the reference numeral 8.

Said stem 2 has, at one of its axial ends, a head 10 which preferably has a hexagonal shape or in any case a shape which can be easily engaged with a tightening tool from the outside of the junction box 8.

An important peculiarity of the invention is constituted by the fact that a plurality of connecting elements 1 is provided and that said connecting elements have the same outside thread, so that they can be coupled in the threaded seat 6, and have, at least at the end opposite to the one provided with the head 10, a gasket 20 which has different characteristics.

An important peculiarity of the gasket 20 is constituted by the fact that it is rigidly associated with the stem 2, and this feature can be obtained either by manufacturing the gasket and the threaded stem by molding in place or possibly by providing, at the portion of the head 10 a recess 21 so as to increase the coupling of the gasket to the stem particularly when a complete chemical affinity does not exist between the materials of the stem and the gasket.

The gasket 20 has a substantially cylindrical shape with an internal hole 25 having different diameters depending on the different diameter of the tubes 30 which must be coupled.

The gasket 20 furthermore has, at the free end of the stem 2, a frustum taper 26 which couples to the frustum flaring 27 which is defined by the inner end of the seat 6 on the junction box, so that the screwing of the connecting element into the seat creates an axial compression of the gasket, with the consequent radial contraction of said gasket against the tube, consequently obtaining a perfect seal.

The gasket 20 can furthermore be provided with, at the head 10, an external flange 28 which is lodged in the recess 21 and an annular enlarged portion 29 which increases the sealing grip on the outer surface of the tube 30, also in case of misalignment.

Obviously, the number of connections may be any according to the type and number of tube diameters, without changing the fact that said connecting elements have the same outside thread so that they can all be coupled in the seats 6.

A plug element, designated by 40, is furthermore provided and has the same shape as the connecting elements 1, with the only difference that it has a completely closed head 41.

From what has been described above it can thus be seen that the invention achieves the intended aim and objects and in particular the fact is stressed that a device for sealingly coupling tubular elements to junction boxes for electrical components is provided which, by using connecting elements which include the gasket with internal diameters which correspond to the different outside diameters of the tubular elements to be coupled, it is possible to always perform a perfect sealed coupling, in any condition of use, consequently allowing to provide junction boxes with an extremely high degree of protection.

Another important aspect of the invention is constituted by the fact that the junction box which can be obtained is extremely versatile since, during installation, the installer applies in the various seats 6 the required connecting elements or plugs according to the various installation requirements.

In practice, the material employed, which is generally constituted by insulating plastic material, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. In combination, a junction box (8) and a plurality of connecting elements (1) for sealingly coupling tubular elements (30) to the junction box, said junction box being provided with a plurality of seats (6) each provided with an internal thread (5), said connecting elements comprising a stem (2) having an internal through channel (3) and an external thread (4) for screwing said stem in said seat (6), said stem further having a gasket (26) with an internal hole (25) for sealingly accommodating a tubular element (30) therein, characterized in that all of said plurality of seats (6) have a similar internal diameter and all of said connecting elements have an equal diameter stem (2), said internal holes (25) of said gaskets having variable diameter which correspond to different outside diameters of the tubular elements (30) to be coupled to the junction box.

2. The combination of claim 1, wherein said gasket abuts against abutment means (27) provided at an inside end of said seat (6) thereby for axially compressing said gasket for a radial compression of said gasket about the tubular element (30).

3. The combination of claim 2, characterized in that said abutment means comprise a frustum flaring (27) and said gasket is provided with a frustum taper for engagement therewith.

4. The combination of one or more of the preceding claims, further comprising plug stems (40) with closed heads (41) for connection in seats (4) in which tubular elements (30) are not coupled.

5. The combination of one or more of the preceding claims, characterized in that said sealing gasket (20) is integrally molded in place together with said threaded stem (2).

6. The combination of one or more of the preceding claims, characterized in that said stem (2) comprises a head (10) accessible from the outside of said junction box (8), said connecting element (1) having, at the region of said head (10), at least one recess (21) for inserting an external flange (28) of said gasket (20) coupled to said threaded stem (2) and defining said internal hole (25).

7. The combination of one or more of the preceding claims, characterized in that said gasket (20) is provided with, in said internal hole (25), an annular enlarged portion (29) for increasing the sealing grip thereof on the outer surface of the tube (30).

8. The combination of claim 6, characterized in that said head (10) has a polygonal shape engageable by a tool.

9. The combination of one or more of the preceding claims, characterized in that said plug-stems (40) are also each provided with a said gasket (20).

## Patentansprüche

1. In Kombination, einer Abzweigdose (8) und eine Vielzahl von Anschlußelementen (1) zum abgedichteten Verbinden rohrförmiger Elemente (30) mit der Abzweigdose, wobei die Abzweigdose mit einer Mehrzahl von Aufnahmen (6) versehen ist, von denen jede mit einem Innengewinde (5) versehen ist, sowie die Anschlußelemente einen Lochstopfen (2) aufweisen, der einen inneren Durchgangakanal (3) und ein Außengewinde (4) zum Einschrauben des Lochstopfens in die Aufnahme (6) hat, der Lochstopfen ferner eine Dichtung (20) mit einem inneren Loch (25) zum abgedichteten Aufnehmen eines rohrförmigen Elementes (30) darin hat, **dadurch gekennzeichnet,** daß alle der Mehrzahl von Aufnahmen (6) einen ähnlichen Innendurchmesser haben und alle Anschlußelemente (1) einen Lochstopfen gleichen Durchmessers haben, sowie die inneren Löcher (25) der Dichtungen variable Durchmesser haben, die mit unterschiedlichen Außendurchmessern der rohrförmigen Elemente (30), die mit der Abzweigdose (8) zu Verbinden sind, übereinstimmen.

2. Die Kombination nach Anspruch 1, wobei die Dichtung gegen ein Widerlager (27), das an einem inneren Ende der Aufnahme (6) vorgesehen ist, stößt und dabei über ein axiales Komprimieren der Dichtung eine radiale Kompression der Dichtung um das rohrformige Element (30) herum bewirkt.

3. Die Kombination nach Anspruch 2, **dadurch gekennzeichnet**, daß das Widerlager eine stumpfe Erweiterung (27) aufweist und die Dichtung mit einer stumpfen Verjüngung zum Eingriff mit dieser versehen ist.

4. Die Kombination nach einem oder mehreren der vorstehenden Ansprüche, weiterhin umfassend Stöpsel (40) mit verschlossenem Kopf (41) zur Verbindung mit Aufnahmen (6), mit denen keine rohrförmigen Elemente (30) verbunden sind.

5. Die Kombination nach einem oder mehreren der vorstehenden Ansprüche, **dadurch gekennzeichnet,** daß die Dichtung (20) zusammen mit dem Gewindestopfen (2) einstückig in einer Form hergestellt ist.

6. Die Kombination nach einem oder mehreren der vorstehenden Ansprüche, **dadurch gekennzeichnet**, daß der Lochstopfen (2) einen Kopf (10) aufweist, der von außerhalb der Abzweigdose (8) zugänglich ist, wobei das Anschlußelement (1) im Bereich des Kopfes (10) mindestens eine Aussparung (21) hat, zum Einsetzen eines äußeren Flansches (28) der Dichtung (20), die mit dem das Gewinde aufweisenden Lochstopfen (2) gekoppelt ist und die innere Öffnung (25) bildet.

7. Die Kombination nach einem oder mehreren der vorstehenden Ansprüche, **dadurch gekennzeichnet,** daß die Dichtung (20) im inneren Loch (25) mit einem ringförmig erweiterten Bereich (29) versehen ist, zum Erhöhen des dichtenden Griffs auf die Außenfläche des Rohres (30).

8. Die Kombination gemäß Anspruch 6, **dadurch gekennzeichnet**, daß der Kopf (10) eine vieleckige Gestalt aufweist, zum Eingriff eines Werkzeuges.

9. Die Kombination nach einem oder mehreren der vorstehenden Ansprüche, **dadurch gekennzeichnet**, daß die Stöpsel (40) jeweils auch mit einer Dichtung (20) versehen sind.

## Revendications

1. En combinaison, un boîtier de jonction (8) et une pluralité d'éléments de liaison (1) pour coupler de façon étanche des éléments tubulaires (30) au boîtier de jonction, ledit boîtier de jonction étant muni d'une pluralité de sièges (6) chacun pourvu d'un taraudage (5), lesdits éléments de liaison comprenant une tige (2) ayant un canal traversant interne (3) et un filetage externe (4) pour visser ladite tige dans ledit siège (6), ladite tige ayant de plus un joint (26) avec un trou interne (25) pour recevoir de façon étanche un élément tubulaire (30) dans celui-ci,
caractérisée en ce que toute ladite pluralité de sièges (6) présente un diamètre interne semblable et tous lesdits éléments de liaison présentent une tige (2) de même diamètre, lesdits trous internes (25) desdits joints ayant des diamètres variables qui correspondent à différents diamètres externes des éléments tubulaires (30) accouplés au boîtier de jonction.

2. Combinaison selon la revendication 1, dans laquelle ledit joint vient en butée contre des moyens d'aboutement (27) prévus à une extrémité interne dudit siège (6) en comprimant ainsi axialement ledit joint pour une compression radiale dudit joint autour de l'élément tubulaire (30).

3. Combinaison selon la revendication 2,
caractérisée en ce que lesdits moyens d'aboutement comprennent un évasement tronqué (27) et ledit joint comporte un effilement tronqué pour s'y engager.

4. Combinaison selon une ou plusieurs des revendications précédentes, comprenant de plus des tiges (40) ayant des têtes fermées (41) pour leur liaison dans des sièges (4) dans lesquels des éléments tubulaires (30) ne sont pas couplés.

5. Combinaison selon une ou plusieurs des revendications précédentes,
caractérisée en ce que ledit joint d'étanchéité (20) est moulé de façon intégrante en place en même temps que ladite tige filetée (2).

6. Combinaison selon une ou plusieurs des revendications précédentes,
caractérisée en ce que ladite tige (2) comprend une tête (10) accessible de l'extérieur dudit boîtier de jonction (8), ledit élément de liaison (1) ayant, dans la zone de ladite tête (10), au moins un évidement (21) pour insérer une bride externe (28) dudit joint (20) couplé à ladite tige filetée (2) et définissant ledit trou interne (25).

7. Combinaison selon une ou plusieurs des revendications précédentes,
caractérisée en ce que ledit joint (20) est muni, dans ledit trou interne (25), d'une partie annulaire élargie (29) pour augmenter son effet d'étanchéité sur la surface externe du tube (30).

8. Combinaison selon la revendication 6,
caractérisée en ce que ladite tête (10) présente une forme polygonale pouvant être engagée par un outil.

9. Combinaison selon une ou plusieurs des revendications précédentes,
caractérisée en ce que lesdites tiges (40) sont également munies, chacune, d'un dit joint (20).
